Europäisches Patentamt

European Patent Office

Office européen des brevets

(19)

(11) Veröffentlichungsnummer: **0 133 876**
**A2**

(12) # EUROPÄISCHE PATENTANMELDUNG

(21) Anmeldenummer: **84106287.0**

(22) Anmeldetag: **01.06.84**

(51) Int. Cl.⁴: **B 60 C 9/18**

(30) Priorität: **18.08.83 DE 3329837**

(43) Veröffentlichungstag der Anmeldung: **13.03.85**
**Patentblatt 85/11**

(84) Benannte Vertragsstaaten: **AT BE CH DE FR GB IT LI LU NL SE**

(71) Anmelder: **Messerschmitt-Bölkow-Blohm Gesellschaft mit beschränkter Haftung, Robert-Koch-Strasse, D-8012 Ottobrunn (DE)**

(72) Erfinder: **Wolf, Anton, Cramer-Klett-Strasse 24, D-8014 Neubiberg (DE)**

(54) Luftreifen mit einer geräuschmindernden Dämpfungseinrichtung.

(57) Um die Lärmemission von Kraftfahrzeug-Luftreifen bei vor allem hinsichtlich Fahrdynamik und Abrollkomfort im wesentlichen unveränderter Reifenstruktur auf fertigungstechnische einfache Weise um mindestens fünf dB (A) zu reduzieren, ist erfindungsgemäß in die Reifenwand nahe der Reifenlauffläche (4) eine zu dieser im wesentlichen parallel angeordnete, mehrschichtige Dämpfungsstruktur (28) in Sandwichbauweise integriert, die aus zugsteifen, aber relativ biegeweichen, durch die einzelnen Stahlgürtellagen (22, 24) des Reifens (4) gebildeten Deckschichten und jeweils dazwischenliegenden, mit diesen flächig verbundenen, viskoelastischen Zwischenschichten (30) aus einem stark verlustbehafteten Dämpfungsmaterial besteht.

EP 0 133 876 A2

Luftreifen mit einer geräuschmindernden

Dämpfungseinrichtung


Die Erfindung bezieht sich auf einen Luftreifen mit einer geräuschmindernden Dämpfungseinrichtung nach dem Oberbegriff
des Anspruchs 1.

Es ist bekannt (DE-OS 30 42 350), dem aufgrund des Halleffektes im Luftinnenraum eines Kraftfahrzeugreifens entstehenden
Geräuschpegel durch eine schalldämpfende Auskleidung der
Reifeninnenfläche entgegenzuwirken. Der vom Reifen erzeugte
Verkehrslärm wird hierdurch aber nur im begrenzten Umfang
gemindert, weil die Lärmemission ihren Ursprung hauptsächlich in einer Körperschallemission der Reifenwand selbst hat,
welche dadurch verursacht wird, daß im Aufstandsbereich des
Reifens durch die Straßenunebenheiten und den Profilaufbau
Biegeschwingungen der Reifenkarkasse induziert werden, welche
sich auf der Lauffläche ausbreiten und ihrerseits sekundär
Luftschall abstrahlen. Um derartige Biegeschwingungen zu reduzieren, ist es ferner bekannt (DE-OS 29 34 523), auf der
Reifeninnenseite im Laufflächenbereich eine schwingungsdämpfende Zusatzmasse anzuordnen, die mit der Reifenwandung eine mit
einem Dämpfungsfluid gefüllte Flüssigkeitstasche begrenzt. Gemessen an der effektiven Lärmreduktion sind solche geräuschmindernden Zusatzeinbauten wegen der damit verbundenen Gewichtserhöhung, des hohen Herstellungsaufwandes und der starken Verringerung des Luftvolumens des Reifens mit Problemen
behaftet.

...

Aufgabe der Erfindung ist es, einen Luftreifen der eingangs angegebenen Art so auszubilden, daß auf fertigungstechnisch einfache Weise und ohne volumen-und gewichtsmäßig aufwendige Einbauten im Reifeninnenraum eine hochgradige Dämpfung der für die erwähnte sekundäre Lärmemission verantwortlichen Biegeschwingungen der Reifenwand garantiert wird.

Diese Aufgabe wird erfindungsgemäß durch den im Anspruch 1 gekennzeichneten Luftreifen gelöst.

Erfindungsgemäß werden aufgrund der Integration eines sog. eingezwängten Sandwich-Dämpfungsbelages in die Reifenwand selbst nahe der Reifen-Lauffläche die lärmverursachenden Biegeschwingungen der Reifenwand unmittelbar am Entstehungsort hochwirksam bedämpft und dennoch bleiben die Fahrdynamik und der Abrollkomfort des Reifens im wesentlichen unverändert erhalten. Die Dämpfungsstruktur läßt sich fertigungstechnisch problemlos und ohne nennenswerte Wanddicken-und Gewichtserhöhung in die Reifenwand einbeziehen und bewirkt aufgrund ihrer speziellen Anordnung und Ausbildung eine beachtliche Lärmreduzierung des Reifens von mehr als fünf dB (A).

In besonders zweckmäßiger Ausgestaltung der Erfindung wird die Sandwich-Dämpfungsstruktur gemäß Anspruch 2 in die Gürtellagen eines Gürtelreifens in der Weise integriert, daß mindestens eine der Gürtellagen als Deckschicht vorgesehen ist, was eine weitere, fertigungstechnisch ganz wesentliche Vereinfachung bedeutet. Um in diesem Fall die Biegeschwingungen der Gürtellagen in eine möglichst große und dementsprechend stark bedämpfte Schubbeanspruchung der viskoelastischen Zwischenschicht umzusetzen, empfiehlt es sich gemäß Anspruch 3, bei einer Dicke bzw. einem Durchmesser der einzelnen Gürtellagen von 1,5 bis 2,5 mm die Dicke jeder Zwischenschicht zwischen 0,5 und 1,5 mm zu bemessen, d.h. durch die angegebene, äußerst geringe Schichtdicke der Dämpfungsstruktur ist diese nicht nur

...

leichter in die Reifenwand zu integrieren, sondern zeigt überraschenderweise auch ein verbessertes Dämpfungsverhalten.

Um die Schwingungsenergie auf dem Wege über eine Schubbeanspruchung der Zwischenschicht möglichst vollständig in Wärme umzusetzen, hat die Zwischenschicht gemäß Anspruch 4 vorzugsweise einen Dämpfungsfaktor von mehr als 0,3, wobei als Zwischenschicht-Material viskoelastische Flüssigkeiten, z.B. Silikone, und gemäß Anspruch 5 zweckmäßigerweise ein hochdämpfender Gummi vorgesehen ist. Zur Verbesserung der Dämpfungseigenschaften kann die Dämpfungsstruktur auch aus mehr als zwei, jeweils über Zwischenschichten miteinander verbundenen Deckschichten bestehen.

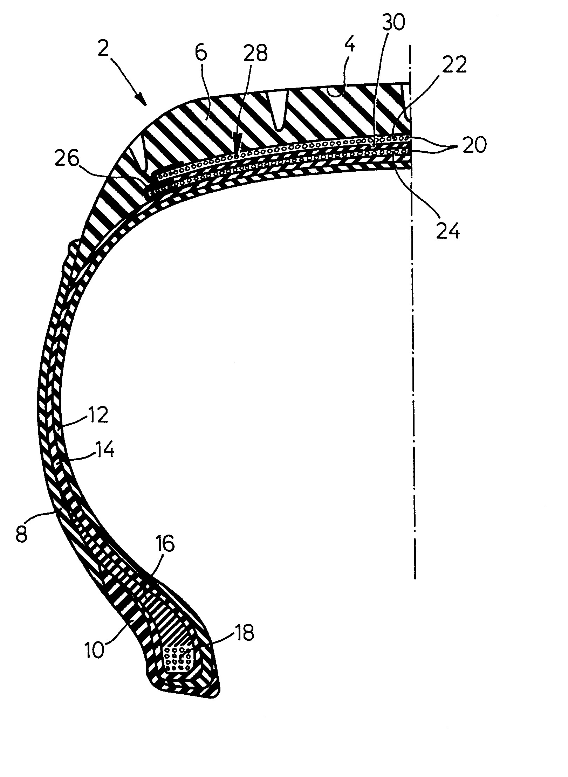

Ein Ausführungsbeispiel der Erfindung wird nachfolgend anhand der Zeichnung, in der ein Luftreifen im Halbschnitt schematisch dargestellt ist, näher erläutert.

Der gezeigte Kraftfahrzeug-Gürtelreifen 2 ist insoweit von herkömmlicher Bauweise, als er aus einem profilierten, mit der Reifenlauffläche 4 versehenen Laufstreifen 6, einem Seitenstreifen 8, einem Wulstprofil 10, einer Innenseele 12, einer Einlage 14, einem Kernprofil 16, einem Kern 18 und einem Gürtel 20 mit mindestens zwei Stahlgürtellagen 22, 24 und einem Kantenschutz 26 besteht. Der Durchmesser bzw. die Dicke der einzelnen Gürtellagen 22, 24 beträgt zwischen 1,5 und 2,5 mm, ihr Elastizitätsmodul liegt zwischen $1 \cdot 10^7$ und $1 \cdot 10^{11}$ N/m$^2$.

Die Gürtellagen 22, 24 dienen nicht nur -wie üblich- zur Versteifung der Reifenwand, sondern sind zugleich Bestandteil einer in diese integrierten Dämpfungsstruktur 28, die als viskoelastischer Sandwich-Dämpfungsbelag mit den Gürtellagen 22, 24 als zugfeste, aber relativ biegeweiche Deckschichten und einer zwischen diesen angeordneten, viskoelastischen

...

Zwischenschicht 30 ausgebildet ist. Die Dicke der Zwischenschicht 30 liegt zwischen 0,5 und 1,5 mm, ihr Dämpfungsfaktor beträgt mehr als 0,3. Sie besteht aus einer hochdämpfenden, sich flächig zwischen den Gürtellagen 22, 24 bis zum Kantenschutz 26 erstreckenden Gummischicht oder wahlweise aus einem anderen viskoelastischen Dämpfungsmaterial bzw. einer Flüssigkeit z.B. Silikone. Enthält der Gürtelreifen 2 weitere Gürtellagen, so können auch diese im Hinblick auf eine verbesserte Dämpfungswirkung jeweils über eine entsprechende viskoelastische Zwischenschicht miteinander verkoppelt sein (nicht gezeigt).

Die durch die Straßenunebenheiten und den Profilaufbau im Aufstandsbereich des Reifens induzierten und sich auf der Reifenwand ausbreitenden Körperschallschwingungen verursachen aufgrund der beschriebenen Anordnung und Ausbildung der Dämpfungsstruktur 28 hohe Schubbeanspruchungen in der (oder den) Zwischenschicht(en) 30, die in dem stark verlustbehafteten Dämpfungsschichtmaterial weitgehend in Wärme umgesetzt werden. Hierdurch wird die Lärmemission des Reifens 2 um mindestens 5 bis 7 dB (A) reduziert, und der fertigungstechnische Mehraufwand für das Einlegen einer zusätzlichen, viskoelastischen Zwischenschicht 30 zwischen die einzelnen Gürtellagen 22, 24 ist bei der ohnehin schichtweisen Herstellung von Kraftfahrzeugreifen äußerst gering.

MESSERSCHMITT-BÖLKOW-BLOHM  1
GESELLSCHAFT
MIT BESCHRÄNKTER HAFTUNG
MÜNCHEN

0133876

Ottobrunn, 8.8.1983
BT01 Im/w
9421

**P a t e n t a n s p r ü c h e**

1. Luftreifen mit einer geräuschmindernden Dämpfungseinrichtung, dadurch g e k e n n z e i c h n e t , daß zwischen
der Reifeninnen-und-außenfläche in die Reifenwand integriert eine im Bereich der Reifenlauffläche (4) zu dieser
im wesentlichen parallel angeordnete, mehrschichtige
Dämpfungsstruktur (28) in Sandwichbauweise mit mindestens
zwei zugsteifen,aber relativ biegeweichen Deckschichten
(22, 24) und einer flächig mit diesen verbundenen, viskoelastischen Zwischenschicht (30) vorgesehen ist.

2. Luftreifen nach Anspruch 1, dadurch g e k e n n z e i c h -
n e t , daß für Gürtelreifen mindestens eine der Gewebe-
oder Stahlgürtellagen (22, 24) als Deckschicht vorgesehen
ist.

3. Luftreifen nach Anspruch 2, dadurch g e k e n n z e i c h -
n e t , daß bei einer Dicke bzw. einem Durchmesser der
einzelnen Gürtellagen (22, 24) von 1,5 bis 2,5 mm die Dicke
jeder Zwischen.schicht (30) zwischen o,5 und 1,5 mm liegt.

4. Luftreifen nach einem der vorhergehenden Ansprüche, dadurch
g e k e n n z e i c h n e t , daß die Zwischenschicht (30)
einen Dämpfungsfaktor von  mehr als 0,3 aufweist.

5. Luftreifen nach Anspruch 4, dadurch g e k e n n z e i c h -
n e t , daß die Zwischenschicht (30) aus hochdämpfendem
Gummi besteht.

...

0133876